# FASCICULE DE BREVET EUROPEEN

(11) **EP 3 140 492 B1**
(45) Date de publication et mention de la délivrance du brevet: **30.01.2019**
(21) Numéro de dépôt: 15721687.0
(22) Date de dépôt: 06.05.2015
(51) Int. Cl.: E21B 17/042, F16L 39/00

(54) **ENSEMBLE DE JONCTION POUR FORMER UNE CONDUITE**
GELENKANORDNUNG ZUR FORMUNG EINER LEITUNG
JOINT ASSEMBLY FOR FORMING A DUCT

(30) Priorité: 06.05.2014 EP 14305664
(43) Date de publication de la demande: 15.03.2017
(73) Titulaire: Total S.A., 92400 Courbevoie (FR)
(72) Inventeur: LE PENNEC, Serge, F-64320 Idron (FR)
(74) Mandataire: Cabinet Plasseraud
(86) Numéro de dépôt international: PCT/EP2015/059955
(87) Numéro de publication internationale: WO 2015/169858

(56) Documents cités:
- FR-A1- 2 673 264
- FR-A1- 2 746 891
- FR-A1- 2 921 996
- US-A1- 2002 089 177
- US-A1- 2003 178 842
- US-A1- 2004 245 768
- US-A1- 2012 192 985
- US-B1- 6 231 086

## Description

### DOMAINE TECHNIQUE

La présente invention est relative à un ensemble de jonction pour former une conduite. Notamment, la conduite est une conduite de transport d'un hydrocarbure.

### ETAT DE LA TECHNIQUE ANTERIEURE

L'objet de l'invention est l'isolement thermique d'une colonne de production dans des applications marines par grand fond. La colonne (conduite) s'étend sensiblement verticalement entre la surface de la mer et un fond situé par exemple 1500 mètres sous ladite surface.

La température de l'eau de mer au fond peut être très froide, de quelques degrés, et par exemple inférieure à 5°C. La température de l'eau de mer en surface peut être entre 10°C et 20°C. La température au fond est très basse, et il y a un gradient de température de l'eau de mer entre le fond et la surface.

La pression hydrostatique au fond de la mer est très importante, car liée à la profondeur importante de l'application considérée qui est comprise entre 500 mètres et 2000 mètres, et éventuellement jusqu'à 3000 mètres de profondeur.

La température du fluide ou effluent d'hydrocarbure dépend du puits sous-marin. A ces pressions hydrostatiques importantes, si la température du fluide est abaissée sous une température limite, il y a de grand risque de provoquer la formation d'hydrates, ou de paraffine. Ces composés solides peuvent boucher les colonnes ou conduites.

L'objectif est de réduire au maximum la variation (réduction) de température du fluide entre sa température au fond et en surface dans de telles colonnes ou conduites montantes. Les applications peuvent être en production de fluide d'hydrocarbure ou de système de récupération de fluide d'hydrocarbures dans le cas de fuites sur de tels puits en grands fonds.

Pour conserver une température importante du fluide pendant sa remontée, si possible proche de la température de sortie en fond de mer, il est utile d'avoir une isolation thermique de cette colonne.

Ainsi, on peut éviter la formation d'hydrates dans la colonne. En outre, plus la température du fluide arrivant en surface est élevée plus son transport et son traitement seront facilités sur les installations en surface, telles que des installations de test de puits (« Well Testing »). La facilité de traitement en surface permet par exemple de se concentrer sur la régulation d'un système de récupération ou confinement en fond marin, système délicat à mettre en oeuvre, comme l'a montré l'expérience de l'incident de la plateforme « Deepwater Horizon » dans le Golfe du Mexique.

Les deux solutions suivantes existent pour l'isolation thermique d'une colonne montante :
La colonne de production sur les puits grands fonds peut être déployée selon deux modes :
- avec tube marin de forage (« Drilling Marine Riser »), ce riser ou tube entourant la colonne sur toute la hauteur entre la surface et le fond marin, il protège la colonne de production des contraintes mécaniques, ou
- sans tube marin de forage (« Drilling Marine Riser »), donc en utilisant une colonne de production ou de forage, directement en pleine mer, cette solution étant dite « Open Sea ».

Dans le premier cas (avec tube marin de forage), il existe un espace annulaire entre le riser et la colonne, et l'isolation thermique de la colonne de production peut être réalisée par les procédés suivants:
a) L'annulaire peut être rempli d'un fluide qui peut être circulé à l'aide d'une pompe et chauffé à l'aide d'échangeur thermique en surface ;
b) L'annulaire peut être rempli d'un gel isolant ;
c) La colonne de production peut-être réalisée en tube à double parois (technique « pipe-in-pipe »), ce tube ayant des caractéristiques mécaniques (résistance en compression de la charge de tubes) inutilisables directement dans la profondeur d'eau directement en pleine mer ;
d) La colonne de production peut être équipée d'un traçage électrique pour la réchauffer par effet Joules en faisant passer un courant électrique dans ledit traçage.

Cette première solution présente l'inconvénient d'avoir besoin d'utiliser un dispositif dit d'obturateur anti-éruption (« Blow Out Preventer » ou BOP), ou au moins d'un dispositif dit d'ensemble de colonne montante marine inférieur (« Lower Mariner Riser Package » ou LMRP). Cet équipement est lourd et génère sur les installations fixes en fond de mer, des contraintes mécaniques importantes (poids, tension, moment) qui conduisent à sur-dimensionner ces équipements.

Dans le deuxième cas (sans tube marin de forage, c'est à dire d'utilisation de la colonne de production en pleine mer), l'isolation thermique de la colonne de production peut être réalisée par un procédé de mise en place d'un isolant extérieur solide autour de la colonne de production.

Cette solution présente l'inconvénient d'avoir besoin d'utiliser une colonne d'un type spécifique, par exemple ayant des organes de fixation et par exemple de type à fixation rapide (« Quick Union »). Elle présente aussi l'inconvénient de nécessiter l'utilisation de moyens de calage, de levage et de tests en pression adaptés à ces organes de fixation. Ces moyens sont plus lourds et plus encombrants et non présents habituellement sur les appareils de forage. Ces colonnes sont lourdes et leur temps de mise en oeuvre est long. Or, une colonne lourde ne permet pas d'atteindre de grandes profondeurs, et notamment des profondeurs supérieures à 1000 mètres. En outre, pour qu'un tel isolant rapporté sur une colonne de production résiste à la pression hydrostatique de l'environnement en fond de mer, un tel isolant est très encombrant (grand diamètre autour de la colonne de production). En outre, la colonne de production est alors très difficilement démontable, surtout si l'isolant se superpose aux jonctions entre la succession de tronçons de la colonne, ou alors elle est démontable en un temps très long.

La demande de brevet n° US 2012/192985 montre un ensemble comprenant deux conduites coaxiales, une conduite interne et une conduite externe, lesdites conduites étant séparées par un isolant, et des éléments de jonctions soudées auxdites conduites et soudées entre elles. Cet ensemble n'est pas démontable et les jonctions ne sont pas isolées.

La demande de brevet n° US 2002/089177 montre une conduite pour fluide cryogénique comprenant une partie femelle et une partie mâle équipée d'un soufflet de compensation.

### EXPOSE DE L'INVENTION

La présente invention a pour but d'améliorer les colonnes ou conduites verticales, notamment pour améliorer leur isolation thermique et leur facilité de montage.

Plus particulièrement, l'invention concerne donc un ensemble de jonction comprenant un premier tronçon et un second tronçon pour former une conduite qui s'étend dans une direction longitudinale, chaque tronçon comprenant au moins un tube interne et d'un tube externe, le tube externe entourant le tube interne, et entre lesquels est placé un isolant thermique, chaque tronçon comprenant un organe de fixation adapté pour que les tronçons puissent être montés ou démontés l'un de l'autre, et dans lequel les tubes internes et les organes de fixation de chaque tronçon sont aptes à résister à des contraintes mécaniques d'une conduite qui s'étend directement en pleine mer entre la surface et le fond sous-marin.

Grâce aux dispositions d'un tel ensemble, une conduite ou colonne de production d'hydrocarbure peut être assemblée rapidement tout en ayant une très bonne isolation thermique.

Dans divers modes de réalisation de l'ensemble selon l'invention, on peut éventuellement avoir recours en outre à l'une et/ou à l'autre des dispositions suivantes.

Selon un aspect de l'invention, les contraintes mécaniques sont au moins des contraintes de pression en pleine mer, des contraintes de poids de l'ensemble et des contraintes de déflexion dues aux sollicitations dynamiques en pleine mer.

Selon un aspect de l'invention, les contraintes mécaniques correspondent à une conduite qui s'étend jusqu'à une profondeur d'au moins 1500 mètres sous la surface, et de préférence jusqu'à 3000 mètres.

Selon un aspect de l'invention, les tubes internes sont réalisés avec un matériau à haute résistance élastique.

Selon un aspect de l'invention, les tubes externes sont soudés sur les tubes internes de chaque tronçon respectif.

Selon un aspect de l'invention, le premier tronçon a une extrémité de forme femelle avec une prolongation dans la direction longitudinale, ladite prolongation ayant un diamètre externe supérieur à une portion précédent ladite prolongation, et un diamètre interne supérieur à un diamètre externe du second tronçon pour connecter lesdits premier et second tronçons.

Selon un aspect de l'invention, le tube interne du premier tronçon comprend à son extrémité une excroissance radiale adaptée pour incorporer son organe de fixation, et le tube externe dudit premier tronçon est rendu solidaire du tube interne du premier tronçon sur ladite excroissance radiale.

Selon un aspect de l'invention, le tube interne du second tronçon comprend à son extrémité une excroissance radiale adaptée pour incorporer son organe de fixation, et le tube externe dudit second tronçon a une forme cylindrique de diamètre identique à ladite excroissance radiale pour les solidariser l'un à l'autre sur ladite excroissance radiale.

Selon un aspect de l'invention, l'ensemble comprend en outre un moyen de compensation adapté pour serrer une portion du premier tronçon sur une portion du second tronçon, afin de réduire une circulation de fluide dans un espace radial situé entre lesdits premier et second tronçons.

Selon un aspect de l'invention, le moyen de compensation est choisi parmi un élément élastique, une forme élastique de la prolongation, une bague montée à l'extérieur de ladite prolongation.

Selon un aspect de l'invention, l'organe de fixation des tronçons est un organe de vissage, ledit organe de vissage ayant de préférence une forme conique.

### BREVE DESCRIPTION DES DESSINS

D'autres caractéristiques et avantages de l'invention apparaîtront au cours de la description suivante d'un de ses modes de réalisation, donné à titre d'exemple non limitatif, en regard des dessins joints.

Sur les dessins :

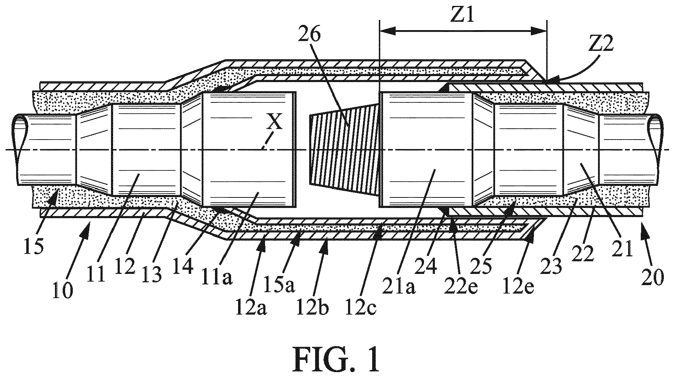

- la figure 1 est une vue en coupe longitudinale de deux tronçons venant en regard l'un de l'autre pour être solidarisés et former une conduite continue, lesdits tronçons étant du type de l'invention.

### DESCRIPTION DETAILLEE DE MODES DE REALISATION

L'objet de l'invention est une conduite formée de tronçons successifs dans une direction longitudinale, et utilisée pour le transport d'un fluide comprenant un hydrocarbure. Plus particulièrement, l'invention concerne une colonne sensiblement verticale adaptée pour être utilisée en environnement marin jusqu'à de grande profondeur, cette conduite étant de type à double parois (« pipe-in-pipe »). Un isolant thermique est placé entre les deux parois.

La paroi interne (tube interne) est dimensionnée pour résister aux charges importantes des tubes en pleine mer (« Open Sea »), c'est-à-dire aux charges mécaniques verticales (poids, tension), et aux moments d'encastrement très importants, notamment pour des cycles dynamiques de fatigue en mer provoqués par exemple par la houle et divers mouvement de l'eau de mer, et qui peuvent affecter grandement la durée de vie. La paroi externe résiste à la pression externe de l'environnement, et évite l'écrasement par collapse de l'isolant. Ainsi, au moins la paroi interne est constituée d'un matériau à haute limite élastique.

L'isolant est par exemple un isolant adapté pour être dans un vide partiel. Ainsi, la performance d'isolation thermique est augmentée. Cet isolant est par exemple à base de feuilles réfléchissantes (multicouches) ou d'un matériau poreux ou d'un matériau alvéolaire ou de billes de verre. L'isolant est par exemple en matière plastique, ou en polyuréthane, ou en polypropylène ou en mousse d'une de ces matières. Cet isolant est par exemple un isolant connu sous le nom de « Izoflex ®» de la société ITP. La matière de l'isolant a par exemple un coefficient de transfert thermique inférieur à 1 W.m-2.K-1, et de préférence inférieur à 0,1 W.m-2.K-1.

La conduite peut ainsi être utilisée directement en pleine mer, sans tube marin de forage, et donc très rapidement. Cette conduite a une très bonne isolation thermique passive. Ainsi, aucun moyen d'alimentation électrique auxiliaire n'est nécessaire pour la chauffer par effet Joules.

La conduite comprend des tronçons de forme générale sensiblement tubulaire. Chaque tronçon 10, 20 est assemblé à un autre, est du même type ou non pour constituer la conduite sous-marine montante ; cette conduite étant adaptée pour être utilisée en environnement marin jusqu'à de grande profondeur. Ces conduites sont par exemple dénommées dans le domaine technique par « conduite de reconditionnement » (« workover riser » ou WOR). Chaque tronçon 10, 20 est de type à double parois.

Chaque tronçon est par exemple vissé sur le suivant, ce qui permet un montage rapide de la conduite. La conduite est démontable et peut être stockée sur l'installation en surface.

Chaque tronçon a par exemple une longueur de sensiblement 13 mètres.

Cette conduite constituée de tronçons à double parois permet l'utilisation de moyen existants de manipulation, de levage, de calage, de vissage et de serrage des installations de forage. Elle permet le stockage des tronçons en vertical ou du gerbage (« racking ») vertical de groupes de tronçons connectés par exemple des groupe de 3 tronçons connectés, donc de 36 mètres de longueur).

Une telle conduite et de tels tronçons peuvent être utilisés pour des colonnes de production de fluide hydrocarbure pour des puits en grands fonds, ou pour des colonnes de récupération de fluide hydrocarbure d'un puits sous-marin ou d'un équipement en grand fonds qui fuit.

Cela peut être utilisé également pour le démarrage de puits. En effet, à la complétion initiale, les puits sont évalués par des procédures de dégorgement (« Clean-up ») et de test de puits (« Well Test ») par des moyens de test placés sur les installations de forage en surface de la mer. Ces procédures ont des séquences ayant des durées parfois longues, même sur des puits à fort potentiel en hydrocarbure. En effet, l'architecture du puits avant production peut être froide (plus froide que pendant la production d'hydrocarbures), et le gradient de température de la colonne de production ne facilite pas l'exécution de ces séquences qui peuvent durer de plusieurs heures à plusieurs jours. L'utilisation de conduites de production à forte isolation thermique peut permettre d'économiser du temps et donc beaucoup d'argent.

Plus particulièrement, l'invention concerne la jonction entre deux tronçons consécutifs, et l'isolation de cette jonction, tel que représenté en **figure 1**. Dans cette figure, le tronçon à gauche se situe de préférence en dessous et le tronçon à droite se situe au-dessus dans la conduite montante vers la surface de la mer.

La conduite comprend un premier tronçon 10 et un second tronçon 20.

Chaque tronçon est constitué d'un tube interne 11, 21, et d'un tube externe 12, 22 entourant le tube interne. Entre les tubes interne et externe est placé un isolant thermique 13, 23. Les tubes internes 11, 21 de chaque tronçon comprennent chacun un organe de fixation. Ces organes de fixation sont par exemple adaptés pour être vissés l'un à l'autre de manière directe ou indirecte via une pièce de jonction intermédiaire.

Le premier tronçon 10 a par exemple une extrémité de forme de type femelle, et le second tronçon 20 a une extrémité de forme de type mâle (ou inversement). Le second tronçon 20 pénètre donc dans le premier tronçon 10 pour être vissé et rendu solidaire (de manière réversible et donc démontable par dévissage pour réutilisation) du premier tronçon.

Le tube externe 22 du second tronçon 20 est rendu solidaire du tube interne 21 sur une excroissance radiale 21a du tube interne, ladite excroissance radiale incorporant une zone filetée 26. Cette solidarisation peut être effectuée par une soudure 24. Ainsi, le tube externe 22 est de forme sensiblement cylindrique à cette extrémité, ce qui en simplifie la réalisation. De plus, la soudure 24 est effectuée sur une portion du tube interne 21 de grande section de matière, ce qui permet une soudure fiable, sans risque de fragilisation ou risque de fissuration.

Un espace interne 25 situé entre le tube externe 22 et le tube interne 21 est alors rempli d'un matériau isolant thermique 23. Cet espace interne 25 est rendu complètement étanche de l'environnement extérieur, par exemple par la soudure 24 précédente, ce qui permet d'éviter des fuites thermiques par aspiration d'un fluide froid dans l'espace interne 25.

En outre, les deux tubes (interne et externe) 21, 22 du second tronçon 20 peuvent transmettre un couple de vissage du second tronçon sur le premier tronçon 10.

Le tube externe 12 du premier tronçon 10 est rendu solidaire du tube interne 11 sur une excroissance radiale 11a en extrémité du tube interne 11, ladite excroissance radiale 11a incorporant une zone filetée (non représentée) complémentaire à la précédente zone filetée 26, et située dans la dernière portion axiale dudit tube interne en direction du second tronçon. Cette solidarisation peut être effectuée par une soudure 14. De même que pour la soudure 14, cette soudure 14 est effectuée sur une portion du tube interne 11 de grande section de matière, ce qui permet une soudure fiable, sans risque de fragilisation ou risque de fissuration.

Le tube externe 12 se prolonge bien en avant de l'excroissance radiale 11a du tube interne et revient en arrière vers cette excroissance radiale 11a. Cette portion du tube externe faisant un aller-retour sera nommée La prolongation 12a. Le tube externe 12 délimite dans cette prolongation 12a (aller-retour) un espace interne 15 rempli d'un matériau isolant thermique 13. Il est rendu complètement étanche de l'environnement extérieur, par exemple par la soudure 14 précédente, ce qui permet d'éviter des fuites thermiques par aspiration d'un fluide froid dans l'espace interne 15.

En outre, les deux tubes (interne et externe) 11, 12 du premier tronçon 10 peuvent transmettre un couple de vissage du second tronçon 20 sur le premier tronçon 10.

Il faut remarquer que le premier tronçon 10 comprend à une extrémité opposée de celle représentée (dans la direction longitudinale), ladite extrémité opposée comprenant de préférence des formes et des dispositions telles présentées ici pour le second tronçon 20. Il en est de manière réciproque pour le second tronçon 20. Ainsi, l'espace interne 15, 25 est parfaitement étanche et les extrémités de chaque tronçon sont aptes pour être vissé sur un tronçon suivant. Notamment, les deux tubes (interne et externe) 11, 12 du premier tronçon 10 peuvent encore transmettre un couple de vissage du second tronçon 20 sur le premier tronçon 10.

Ainsi, grâce aux soudures 14, 24, l'espace annulaire entre les tubes interne et externe (rempli par un isolant), est étanche, ce qui supprime toute éventuelle circulation de fluide froid (eau de mer) et tout « effet de cheminée » (ou aspiration) d'eau dans la conduite verticale entre le fond de mer ayant une eau froide et la surface ayant une eau chaude.

En outre, il faut noter que les tubes internes 11, 21 sont réalisés en acier en haute limite élastique pour les raisons de contraintes mécaniques de ces tubes montés verticalement en « Open Sea » (notamment, la contrainte de poids de l'ensemble des tronçons assemblés). Ainsi, l'homme du métier n'aurait pas effectué précédemment de telles soudures par crainte de détériorer les caractéristiques et qualités métallurgiques indispensables à la durée de vie de ces tubes très contraints.

La prolongation 12a du tube externe 12 comprend ainsi :
- une première portion 12b externe, sensiblement cylindrique de diamètre supérieur au diamètre du tube externe 12 en amont de cette prolongation, et qui s'étend jusqu'à une extrémité avant 12e, et
- une seconde portion 12c interne, sensiblement cylindrique qui revient depuis l'extrémité 12e jusqu'à la soudure 14 sur l'excroissance radiale 11a, ladite seconde portion 12c ayant un diamètre inférieur au diamètre de la première portion 12b pour délimiter un espace de prolongation 15a dans le prolongement de l'espace interne 15. L'espace de prolongation 15a est également rempli du matériau isolant thermique 13.

Le diamètre de la seconde portion 12b est supérieur au diamètre du tube externe 22 (et du second tronçon 20 en général), de sorte que lorsque le second tronçon 20 est complètement inséré dans le premier tronçon 10, l'espace de prolongation 15a se superpose radialement à l'espace interne 25 sur au moins sur une zone Z1 dans la direction longitudinale de la conduite.

Par conséquent, sur cette zone Z1 l'isolant 13 du premier tronçon 10 se superpose radialement à l'isolant 23 du second tronçon 20. L'isolation thermique est ainsi continue (pas d'interruption d'isolation dans les directions longitudinale et radiale).

En outre, grâce à la géométrie définie ci-dessus, la jonction et notamment le second tronçon 20 est simple à réaliser. La conduite formée par ces tronçons a un encombrement radial réduit tout en fournissant une continuité d'isolation thermique et une étanchéité performante.

Avantageusement, cette zone Z1 a une longueur dans la direction longitudinale de la conduite supérieure à 50 centimètres et de préférence supérieure à 1 mètre. L'amélioration de l'isolation thermique de ces zones de jonction entre tronçons est très importante pour l'efficacité thermique de la colonne (conduite) complète.

En outre, un système à double parois augmente normalement très notablement le diamètre externe et le poids de l'ensemble d'une colonne, de sorte que le tube interne doit être encore plus résistant aux contraintes mécaniques. Selon la présente invention, la géométrie des tronçons dans la zone de jonction et l'utilisation de soudures pour former ladite double paroi permet de limiter cette augmentation de poids, grâce à quoi la colonne constituée peut aller jusqu'à des profondeurs plus grande, notamment supérieure à 1500 mètres.

Entre le tube externe 22 du second tronçon 20 et la seconde portion 12b du premier tronçon 10, il existe un espace Z2. Cet espace Z2 est nécessaire aux montages des tronçons, mais il peut être très réduit ou annulé par divers moyens de compensation. Ainsi, la circulation de fluide froid (eau de mer) dans cet espace Z2 peut être limité et réduit, et les pertes thermiques correspondantes sont également réduites.

Selon une première variante, cet espace Z2 comprend un élément élastique d'étanchéité, par exemple de type « wiper joint ». Ce joint peut permettre une compensation en pression tout en limitant les circulations de fluide.

Selon une seconde variante, la prolongation 12a comprend des formes adaptées pour que ladite prolongation 12a soit elle-même élastique radialement et pour qu'elle vienne radialement en contact sur la portion cylindrique externe du second tronçon 20.

Selon une troisième variante, le premier tronçon 10 comprend une bague (par exemple élastique ou de vissage) montée à l'extérieur de l'extrémité de la prolongation 12a pour venir la serrer radialement sur le second tronçon 20. De cette manière, l'espace Z2 est rendu faible ou même nul de sorte à rendre plus étanche la jonction entre les deux tronçons 10, 20. Les performances d'isolation thermique de la jonction des deux tronçons et les performances d'étanchéité de cette jonction sont ainsi améliorées.

Il est entendu que le tube externe 12 et notamment la prolongation 12a peuvent être réalisés par soudage de plusieurs éléments (par exemple au moins la première portion 12b et la une seconde portion 12c).

Les zones filetées des premier est second tronçons 10, 20 sont par exemple de type conique, et présentent avantageusement des formes et organes adaptées pour améliorer l'étanchéité et la résistance de la fixation des tronçons entre eux.

Grâce aux dispositions des tronçons décrits ci-dessus, on réalise une conduite de production verticale apte à être montée et démontée rapidement avec les outils conventionnels et ayant simultanément des caractéristiques de résistance mécanique d'un riser de forage ou de « work over riser » et des caractéristiques thermiques très améliorées. Les pertes thermiques aux jonctions sont très réduites ou annulées. La formation d'hydrate dans cette conduite utilisée pour des applications par grands fonds marin est ainsi évitée.

Grâce aux formes d'extrémité des tronçons, et notamment grâce à l'excroissance radiale des tubes internes, la liaison mécanique entre chaque tronçon est mécaniquement très résistante, et elle est apte à résister aux contraintes de traction, de tension, de poids et de moment.

Grâce aux tronçons selon l'invention, ceux-ci sont plus légers que les solutions actuelles à isolation thermique équivalente, les contraintes mécaniques sont ainsi réduites et les tronçon permettent d'aller à des profondeurs très supérieures.

## Revendications

1. Ensemble de jonction comprenant un premier tronçon (10) et un second tronçon (20) pour former une conduite qui s'étend dans une direction longitudinale, chaque tronçon comprenant au moins un tube interne (11, 21) et d'un tube externe (12, 22), le tube externe entourant le tube interne, et entre lesquels est placé un isolant thermique (13, 23), chaque tronçon comprenant un organe de fixation adapté pour que les tronçons puissent être montés ou démontés l'un de l'autre, et dans lequel les tubes internes (11, 21) et les organes de fixation de chaque tronçon sont aptes à résister à des contraintes mécaniques d'une conduite qui s'étend directement en pleine mer entre la surface et le fond sous-marin.

2. L'ensemble selon la revendication 1, dans lequel les contraintes mécaniques sont au moins des contraintes de pression en pleine mer, des contraintes de poids de l'ensemble et des contraintes de déflexion dues aux sollicitations dynamiques en pleine mer.

3. L'ensemble selon la revendication 1 ou la revendication 2, dans lequel les contraintes mécaniques correspondent à une conduite qui s'étend jusqu'à une profondeur d'au moins 1500 mètres sous la surface, et de préférence jusqu'à 3000 mètres.

4. L'ensemble selon la revendication 1, dans lequel les tubes internes sont réalisés avec un matériau à haute résistance élastique.

5. L'ensemble selon la revendication 1, dans lequel les tubes externes sont soudés sur les tubes internes de chaque tronçon respectif.

6. L'ensemble selon l'une des revendications 1 à 5, dans lequel le premier tronçon (10) a une extrémité de forme femelle avec une prolongation (12a) dans la direction longitudinale, ladite prolongation (12a) ayant un diamètre externe supérieur à une portion précédent ladite prolongation, et un diamètre interne supérieur à un diamètre externe du second tronçon (20) pour connecter lesdits premier et second tronçons.

7. L'ensemble selon l'une des revendications 1 à 6, dans lequel le tube interne (11) du premier tronçon comprend à son extrémité une excroissance radiale adaptée pour incorporer son organe de fixation, et le tube externe (12) dudit premier tronçon (10) est rendu solidaire du tube interne (11) du premier tronçon sur ladite excroissance radiale.

8. L'ensemble selon l'une des revendications 1 à 7, dans lequel le tube interne du second tronçon comprend à son extrémité une excroissance radiale adaptée pour incorporer son organe de fixation, et le tube externe (22) dudit second tronçon (20) a une forme cylindrique de diamètre identique à ladite excroissance radiale pour les solidariser l'un à l'autre sur ladite excroissance radiale.

9. L'ensemble selon l'une des revendications 1 à 8, comprenant en outre un moyen de compensation adapté pour serrer une portion du premier tronçon sur une portion du second tronçon, afin de réduire une circulation de fluide dans un espace (Z2) radial situé entre lesdits premier et second tronçons.

10. L'ensemble selon la revendication 9, dans lequel le moyen de compensation est choisi parmi un élément élastique, une forme élastique de la prolongation, une bague montée à l'extérieur de ladite prolongation.

11. L'ensemble selon la revendication 1, dans lequel l'organe de fixation des tronçons est un organe de vissage, ledit organe de vissage ayant de préférence une forme conique.

## Patentansprüche

1. Verbindungsanordnung, aufweisend einen ersten Abschnitt (10) und einen zweiten Abschnitt (20) zur Bildung einer Leitung, die sich in einer Längsrichtung erstreckt, wobei jeder Abschnitt mindestens ein Innenrohr (11, 21) und ein das Innenrohr umgebendes Außenrohr (12, 22) aufweist, zwischen denen eine thermische Isolierung (13, 23) angeordnet ist, wobei jeder Abschnitt ein Befestigungselement aufweist, das eingerichtet ist, um die Abschnitte zusammenzubauen oder voneinander demontieren zu können, und wobei die Innenrohre (11, 21) und die Befestigungselemente jedes Abschnitts fähig sind, mechanischen Beanspruchungen einer Leitung standzuhalten, die sich im offenen Meer auf direktem Wege zwischen der Oberfläche und dem Meeresboden erstreckt.

2. Anordnung nach Anspruch 1, in welcher die mechanischen Beanspruchungen zumindest Druckbeanspruchungen im offenen Meer, Gewichtsbeanspruchungen der Anordnung und durch dynamische Belastungen im offenen Meer hervorgerufene Biegebeanspruchungen sind.

3. Anordnung nach Anspruch 1 oder Anspruch 2, in welcher die mechanischen Beanspruchungen einer Leitung entsprechen, die sich unter der Oberfläche bis in eine Tiefe von mindestens 1500 Meter und bevorzugt 3000 Meter erstreckt.

4. Anordnung nach Anspruch 1, in welcher die Innenrohre aus einem Material hergestellt sind, das einen hohen elastischen Widerstand hat.

5. Anordnung nach Anspruch 1, in welcher in jedem Abschnitt die Außenrohre an die jeweiligen Innenrohre geschweißt sind.

6. Anordnung nach einem der Ansprüche 1 bis 5, in welcher der erste Abschnitt (10) ein steckbuchsenförmiges Ende mit einer Verlängerung (12a) in der Längsrichtung hat, wobei die Verlängerung (12a) einen größeren Außendurchmesser als ein der Verlängerung vorangehender Teil und einen größeren Innendurchmesser als ein Außendurchmesser des zweiten Abschnitts (20) hat, um den ersten und zweiten Abschnitt zu verbinden.

7. Anordnung nach einem der Ansprüche 1 bis 6, in welcher das Innenrohr (11) des ersten Abschnitts an seinem Ende eine radiale Erweiterung aufweist, die zum Einbauen seines Befestigungselements eingerichtet ist, und an der radialen Erweiterung das Außenrohr (12) des ersten Abschnitts (10) festverbunden mit dem Innenrohr (11) des ersten Abschnitts gemacht ist.

8. Anordnung nach einem der Ansprüche 1 bis 7, in welcher das Innenrohr des zweiten Abschnitts an seinem Ende eine radiale Erweiterung aufweist, die zum Einbauen seines Befestigungselements eingerichtet ist, und das Außenrohr (22) des zweiten Abschnitts (20) eine zylindrische Form eines gleichen Durchmessers wie die radiale Erweiterung hat, um sie an der radialen Erweiterung fest miteinander zu verbinden.

9. Anordnung nach einem der Ansprüche 1 bis 8, aufweisend ferner eine Kompensationseinrichtung, die zum Drängen eines Teils des ersten Abschnitts an einen Teil des zweiten Abschnitts eingerichtet ist, um ein Einströmen von Fluid in einen zwischen dem ersten und zweiten Abschnitt angeordneten radialen Raum (Z2) zu verringern.

10. Anordnung nach Anspruch 9, in welcher die Kompensationseinrichtung ausgewählt ist aus einem elastischen Element, einer elastischen Form der Verlängerung, einem an der Außenseite der Verlängerung angebrachten Ring.

11. Anordnung nach Anspruch 1, in welcher das Befestigungselement zum Befestigen der Abschnitte ein Verschraubungselement ist, das vorzugsweise kegelförmig ist.

## Claims

1. Joint assembly comprising a first section (10) and a second section (20) for forming a duct that extends in a longitudinal direction, each section comprising at least one inner tube (11,21) and one outer tube (12, 22), the outer tube surrounding the inner tube, and between which a heat insulator (13, 23) is placed, each section comprising a fastening body adapted so that the sections can be assembled to, or disassembled from, each other, and wherein the inner tubes (11, 21) and the fastening bodies of each section are able to resist mechanical stresses of a duct that extends directly in the open sea between the surface and the sea bed.

2. Assembly according to claim 1, wherein the mechanical stresses are at least pressure stresses in the open sea, weight stresses for the whole and deflection stresses due to the dynamic stresses in the open sea.

3. Assembly according to claim 1 or claim 2, wherein the mechanical stresses correspond to a duct that extends to a depth of at least 1500 meters under the surface, and more preferably to 3000 meters.

4. Assembly according to claim 1, wherein the inner tubes are carried out with a material with high yield strength.

5. Assembly according to claim 1, wherein the outer tubes are welded on the inner tubes of each respective section.

6. Assembly according to one of claims 1 to 5, wherein the first section (10) has a female shape end with an extension (12a) in the longitudinal direction, said extension (12a) having an outer diameter greater than a portion preceding said extension, and an inner diameter greater than an outer diameter of the second section (20) in order to connect said first and second sections.

7. Assembly according to one of claims 1 to 6, wherein the inner tube (11) of the first section comprises at its end a radial protrusion adapted to incorporate its fastening body, and the outer tube (12) of said first section (10) is made integral with the inner tube (11) of the first section on said radial protrusion.

8. Assembly according to one of claims 1 to 7, wherein the inner tube of the second section comprises at its end a radial protrusion adapted to incorporate its fastening body, and the outer tube (22) of said second section (20) has a cylindrical shape with a diameter identical to said radial protrusion in order to fasten them to one another on said radial protrusion.

9. Assembly according to one of claims 1 to 8, further comprising a means of compensation adapted to tighten a portion of the first section over a portion of the second section, in order to reduce a circulation of fluid in a radial space (Z2) located between said first and second sections.

10. Assembly according to claim 9, wherein the means of compensation is chosen from an elastic element, an elastic form of the extension, a ring assembled outside said prolongation.

11. Assembly according to claim 1, wherein the fastening body of the sections is a screwing body, said screwing body having more preferably a conical shape.
